# EUROPÄISCHE PATENTSCHRIFT

(11) **EP 4 094 642 B1**
(45) Veröffentlichungstag und Bekanntmachung des Hinweises auf die Patenterteilung: **03.01.2024**
(21) Anmeldenummer: 22169984.6
(22) Anmeldetag: 26.04.2022
(51) Int. Cl.: A47J 31/44

(54) **GETRÄNKEAUTOMAT**
AUTOMATIC BEVERAGE PREPARATION DEVICE
DISTRIBUTEUR AUTOMATIQUE DE BOISSONS

(30) Priorität: 25.05.2021 DE 102021205308
(43) Veröffentlichungstag der Anmeldung: 30.11.2022
(73) Patentinhaber: BSH Hausgeräte GmbH, 81739 München (DE)
(72) Erfinder: Mies, Maximilian, 83253 Rimsting (DE); Rautter, Felix, 83339 Chieming (DE); Steffl, Michael, 83250 Marquartstein (DE)

(56) Entgegenhaltungen:
- EP-A1- 1 210 894
- EP-A1- 3 090 663
- EP-A1- 3 669 718
- EP-A2- 1 903 519

## Beschreibung

Die vorliegende Erfindung betrifft einen Getränkeautomaten mit einem entnehmbaren Behälter.

Moderne Getränkeautomaten, beispielweise Kaffeevollautomaten, besitzen abnehmbare, das heißt entnehmbare, Behälter, insbesondere zur Pflegemittelbevorratung, die zur Durchführung zyklischer Pflegeprozesse, beispielsweise einer Entkalkung oder Reinigung aller fluidführenden Komponenten, benötigt werden. Hierdurch soll die dauerhafte Funktion aller Komponenten gewährleistet werden. Der zyklische Pflegebeziehungsweise Reinigungsprozess soll dabei auch möglichst automatisiert ablaufen, wodurch eine kontinuierliche, automatisierte Pflege des Getränkeautomaten gewährleistet und dessen Funktionsfähigkeit langfristig aufrechterhalten werden kann. Üblicherweise werden dazu Pflegeprogramme eingesetzt, die den Pflegeprozess zu einem vordefinierten Zeitpunkt durchführen, an dem der Getränkeautomat üblicherweise nicht in Betrieb ist, so dass ein Nutzer beziehungsweise eine Nutzerin zu seinen/ihren gewohnten Nutzungszeiten uneingeschränkt Zugriff auf den Getränkeautomaten hat und daraus Getränke beziehen kann. Das Dokument EP 3 090 663 A1 offenbart einen Getränkeautomaten, der mehrere Reedschalter umfasst, die mit einem, an einem entnehmbaren Behälter angeordneten Magnet zusammenwirken.

Damit die Pflegeprozesse die gewünschte und erforderliche Wirksamkeit erzielen können, ist es erforderlich, dass zum Zeitpunkt eines anstehenden Pflegeprozesses sowohl der Pflegemittelbehälter eingebaut als auch eine für den Pflegeprozess ausreichende Menge an Pflegemittel im Pflegemittelbehälter vorhanden ist. Ist nämlich beispielsweise der Pflegemittelbehälter zwar im Getränkeautomaten eingesetzt, jedoch leer, kann ebenso wenig ein erfolgreicher Pflege- beziehungsweise Reinigungsprozess gestartet werden, wie wenn gar kein Pflegemittelbehälter vorhanden ist.

Üblicherweise wird die Anwesenheit eines derartigen Pflegemittelbehälters beispielsweise über einen Kontaktschalter oder einen Sensor erfasst, ebenso wie ein Füllstand in dem Pflegemittelbehälter über einen entsprechenden Sensor überwacht wird. Derartige Kontaktschalter beziehungsweise unterschiedliche Sensoren erfordern jedoch spezielle konstruktive Gegebenheiten mit einer entsprechenden Verdrahtung an einer Steuereinrichtung, was nicht nur aufwendig ist und einen nicht zu unterschätzenden Bauraumbedarf erfordert, sondern auch oftmals eine Montagefreundlichkeit reduziert, da zum einen am Gehäuse des Getränkeautomaten ein erster Sensor, beispielsweise ein Kontaktschalter, zum Erfassen der Anwesenheit des Pflegemittelbehälters sowie ein zweiter Sensor, beispielsweise ein Füllstandsensor, zur Erfassung einer Menge an in dem Pflegemittelbehälter vorhandenem Pflegemittel erforderlich sind.

Die vorliegende Erfindung beschäftigt sich daher mit dem Problem, für einen Getränkeautomaten eine verbesserte oder zumindest eine alternative Ausführungsform anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf den allgemeinen Gedanken, nicht mehr wie bislang Kontaktschalter und Füllstandsensoren an unterschiedlichen Stellen im Gehäuse eines Getränkeautomaten anzuordnen und zusätzlich aufwendig zu verdrahten, sondern sowohl das Erfassen der Anwesenheit eines Behälters, beispielsweise eines Pflegemittelbehälters, als auch die Erfassung eines Füllstandes an Flüssigkeit/Feststoff in dem Behälter, beispielsweise an Pflegemittel in dem Pflegemittelbehälter, über zwei gemeinsam auf einer Leiterplatte angeordnete Reedschalter zu gewährleisten. Der erfindungsgemäße Getränkeautomat, welcher beispielsweise als Kaffeeautomat ausgebildet sein kann, besitzt zumindest einen entnehmbaren Behälter zur Aufnahme insbesondere einer Flüssigkeit, beispielsweise einen Pflegemittelbehälter zur Aufnahme einer Pflege- beziehungsweise Reinigungsflüssigkeit, sowie die zuvor erwähnte Leiterplatte, auf der sowohl der erste Reedschalter als auch der zweite Reedschalter gemeinsam angeordnet sind. Die beiden Reedschalter sind dabei vorzugsweise in Vertikalrichtung gesehen parallel zueinander angeordnet. Reedschalter beziehungsweise Reedkontakte sind üblicherweise in einem Glasrohr eingeschmolzene bewegliche Kontaktzungen aus einer Eisen-Nickel-Legierung, die durch ein Magnetfeld betätigt werden und darüber einen elektrischen Kontakt schließen. Die Schaltungen sind dabei ferromagnetisch. Der Vorteil eines derartigen Reedschalters ist dessen äußerst geringe Größe sowie ein hermetisch abgedichteter Schalter, der zudem in der Lage ist, schnelle Schaltvorgänge auszuführen. An dem abnehmbaren Behälter sind zudem ein erster Magnet mit einem ersten Magnetpolpaar sowie ein zweiter Magnet mit einem orthogonal zum ersten Magnetpolpaar ausgerichteten zweiten Magnetpolpaar angeordnet, wobei der erste Magnet mit dem ersten Reedschalter an der Leiterplatte und der zweite Magnet mit dem zweiten Reedschalter an der Leiterplatte zusammenwirkt. Hierdurch kann gewährleistet werden, dass der Pflege- beziehungsweise Reinigungsprozess, insbesondere automatisiert, ausschließlich dann gestartet wird, wenn sowohl der als Pflegemittelbehälter ausgebildete Behälter anwesend ist, als auch eine für den gewünschten Pflege-/Reinigungsprozess erforderliche Menge an Pflegemittel in dem Pflegemittelbehälter vorhanden ist. Durch die vorzugsweise in Vertikalrichtung parallele Anordnung der beiden Reedschalter an der Leiterplatte sowie die unterschiedliche Orientierung der Magnete am Behälter wird ein sich örtlich von einem Schaltgebiet des zweiten Reedschalters abgrenzender Schaltbereich des ersten Reedschalters genutzt, um unterschiedliche Gegebenheiten (Anwesenheit/Füllstand) einfach aber dennoch exakt zu detektieren. Gleichzeitig lässt sich durch die Anordnung der beiden Reedschalter auf der Leiterplatte eine einfache Verdrahtung beider Reedschalter und letztendlich auch ein Zusammenschluss über einen gemeinsamen Stecker zur Anbindung an eine Steuereinrichtung des Getränkeautomaten realisieren, wodurch eine äußerst hohe Montagefreundlichkeit und damit ein deutlich reduzierter Herstellungsaufwand erreicht werden können. Über die beiden Magnete am Behälter und die damit kommunizierend verbundenen Reedschalter an der Leiterplatte, kann zudem eine kontaktlose Erfassung sowohl der Anwesenheit des Behälters als auch eines Füllstandes in dem Behälter gewährleistet werden. Da derartige Reedschalter einen geringen Bauraumbedarf aufweisen, kann mit dieser Lösung auch eine kompakte Bauweise erreicht werden.

Zweckmäßig ist der Behälter ein Pflegemittelbehälter. Besonders zum Starten von Pflege/Reinigungsprozessen in Getränkeautomaten, beispielsweise Kaffeevollautomaten, ist es erforderlich, sowohl die Anwesenheit von Pflegemittel beziehungsweise Reinigungsmittel als auch das Vorhandensein einer ausreichenden Menge an Pflege-/Reinigungsmittel genau zu erfassen. Über die beiden Reedschalter an der Leiterplatte und die beiden Magnete an dem in diesem Fall als Pflegemittelbehälter ausgebildeten Behälter, können diese beiden Voraussetzungen vergleichsweise einfach erfasst und überwacht werden. Selbstverständlich ist dabei klar, dass der Behälter rein theoretisch auch als Wassertank, als Bohnenbehälter oder als beliebiger anderer Behälter ausgebildet sein kann. Weiter ist klar, dass auch mehrere dieser Behälter mit entsprechenden Magneten und an der Leiterplatte zugehörigen Reedschaltern in einem gemeinsamen Getränkeautomaten denkbar sind.

Bei einer vorteilhaften Weiterbildung der erfindungsgemäßen Lösung ist der erste Magnet fest am Behälter angeordnet, wobei der erste Reedschalter für die Erfassung der Anwesenheit dieses Behälters ausgebildet ist. Durch das Einsetzen des Behälters in den Getränkeautomaten wird durch das Magnetfeld des ersten Magnets der erste Reedschalter geöffnet beziehungsweise geschlossen und dadurch die Anwesenheit des Behälters im Getränkeautomaten angezeigt. Ein derartiger Magnet am Behälter kann kompakt und zudem leicht ausgeführt sein und insbesondere auch in einen Kunststoff des Behälters eingebettet sein, wodurch dieser geschützt angeordnet werden kann.

Zweckmäßig ist der zweite Magnet beweglich am Behälter angeordnet und der zweite Reedschalter ist zur Erfassung eines Füllstandes in dem Behälter ausgebildet. Durch die bewegliche Anordnung des zweiten Magneten am Behälter verändert dieser seine Lage in Abhängigkeit des Füllstandes, beispielsweise durch Kopplung mit einem Schwimmer, wodurch sich auch das vom zweiten Magneten erzeugte Magnetfeld abhängig vom Füllstand im Behälter ändert und den zweiten Reedschalter nur dann schließt beziehungsweise öffnet, vorzugsweise jedoch schließt, sofern ein vordefinierter Füllstand, der einen problemlosen Pflege-/Reinigungsprozess ermöglicht, vorhanden ist. Sinkt dabei ein Inhalt der in dem Behälter angeordneten Substanz unter ein vordefiniertes Niveau, so kann der zweite Reedschalter durch das Magnetfeld des zweiten Magneten nicht mehr geschlossen beziehungsweise geöffnet werden, wodurch über eine entsprechende Steuerungseinrichtung zwar die Anwesenheit des Behälters über den ersten Magneten und den ersten Reedschalter erkannt wird, ein Pflege-/Reinigungsprozess jedoch nicht ausgelöst wird, da die hierfür erforderliche Menge an Pflege-/Reinigungsmittel nicht vorhanden ist. Durch die unterschiedliche Orientierung der Magnetpolpaare der beiden am Behälter angeordneten Magnete, kann zudem eine unerwünschte und gegenseitige Beeinflussung der beiden Reedschalter durch das Magnetfeld des jeweils nicht zugehörigen Magnets am Behälter zuverlässig vermieden werden.

Bei einer weiteren vorteilhaften Ausführungsform des erfindungsgemäßen Getränkeautomaten ist eine mit dem ersten und zweiten Reedschalter kommunizierend verbundene Steuereinrichtung vorgesehen, die so ausgebildet ist, dass sie einen Pflege-/Reinigungsprozess ausschließlich dann startet, wenn der Behälter anwesend ist und ein Füllstand in demselben einen vordefinierten Grenzwert nicht unterschreitet und insbesondere sowohl der erste Reedschalter als auch der zweite Reedschalter geschlossen sind. Ist somit beispielsweise der erste Reedschalter geschlossen, der zweite Reedschalter jedoch geöffnet und steht zudem ein Pflege-/Reinigungsprozess an, so kann die Steuereinrichtung ein entsprechendes Signal an einem Display bzw. User Interface des Getränkeautomaten anzeigen, mit welchem auf eine zu geringe Menge an Pflegemittel hingewiesen wird. Diese Anordnung ist beispielsweise denkbar, sofern die beiden Reedschalter am Gehäuse auf einer Höhe angeordnet sind, die in Bezug auf den Behälter in einem oberen oder mittleren Bereich des Behälters liegt.

Bei einer weiteren vorteilhaften Ausführungsform des erfindungsgemäßen Getränkeautomaten ist eine mit dem ersten und zweiten Reedschalter kommunizierend verbundene Steuereinrichtung vorgesehen, die so ausgebildet ist, dass sie einen Pflege-/Reinigungsprozess ausschließlich dann startet, wenn der Behälter anwesend ist und ein Füllstand in demselben einen vordefinierten Grenzwert nicht unterschreitet und insbesondere der erste Reedschalter geschlossen, der zweite Reedschalter jedoch geöffnet ist. Diese Anordnung ist denkbar, sofern die beiden Reedschalter am Gehäuse auf einer Höhe angeordnet sind, die in Bezug auf den Behälter in einem unteren Bereich des Behälters liegt. Beim Einsetzen des Behälters wird dann durch das Magnetfeld des ersten Magneten der erste Reedschalter geschlossen. Befindet sich der zweite Magnet ebenfalls auf dieser Höhe und ist zugleich mit einem zur Erfassung des Füllstandes vorgesehenen Schwimmer gekoppelt, so wird der zweite Reedschalter ebenfalls geschlossen. In diesem Fall wäre jedoch nur wenig oder für einen Pflegeprozess nicht ausreichend viel Flüssigkeit/Feststoff im Behälter. In diesem Fall wäre somit die Steuereinrichtung so ausgebildet, dass sie den Pflege-/Reinigungsprozess bei gleichzeitig geschlossenem ersten und zweiten Reedschalter nicht startet. Wird der Behälter befüllt, so bewegt sich der zweite Magnet nach oben und damit aus dem Schaltbereich des zweiten Reedschalters heraus. Der Pflege-/Reinigungsprozess kann dann gestartet werden, wenn der erste Magnet im Schaltgebiet des ersten Reedschalters ist und diesen schließt, während der zweite Magnet außerhalb des Schaltbereichs des zweiten Reedschalters ist und dieser daher geöffnet ist.

Bei einer weiteren vorteilhaften Ausführungsform des erfindungsgemäßen Getränkeautomaten ist dieser als Kaffeevollautomat ausgebildet. Selbstverständlich stellt dies lediglich eine mögliche Ausführungsform dar, so dass auch andere Getränkeautomaten, oder generell sogar auch Automaten, mittels welchen Suppen, Kakao oder Ähnliches zubereitet werden kann, von der Erfindung mit umfasst sein sollen. Besonders bei Kaffeevollautomaten, die auch im Consumerbereich eine zunehmende Verbreitung finden, ist die erfindungsgemäße Leiterplatte mit den beiden parallel angeordneten Reedschaltern und den am Behälter orthogonal zueinander angeordneten Magneten besonders sinnvoll, da besonders im Consumerbereich eine erhöhte Montagefreundlichkeit und damit eine Senkung der Herstellungskosten von Vorteil ist.

Bei einer weiteren vorteilhaften Ausführungsform der erfindungsgemäßen Lösung weist die Leiterplatte eine elektrische Steckverbindung auf, über welche sie mit der Steuereinrichtung kommunizierend verbunden beziehungsweise verbindbar ist. Bei dieser Ausführungsform ist es somit möglich, die beiden Reedschalter oder gegebenenfalls noch weitere Reedschalter auf der Leiterplatte anzuordnen und diese über lediglich einen einzigen Stecker mit einer entsprechenden elektrischen Steckverbindung am Getränkeautomaten zu kontaktieren. Auch hierdurch kann im Vergleich zu einer separaten Kontaktierung jedes Reedschalters beziehungsweise jedes Sensors eine deutlich erhöhte Montagefreundlichkeit geschaffen werden.

Zweckmäßig weist der Getränkeautomat ein Gehäuse mit einer Führungsnut auf, in welche die Leiterplatte einschiebbar und darüber am Gehäuse zu positionieren ist. Über eine derartige Führungsnut beziehungsweise zwei gegenüberliegende Führungsnuten ist ein besonders montagefreundliches Fixieren der Leiterplatte am Gehäuse des Getränkeautomaten und damit am Getränkeautomaten möglich, da in diesem Fall die Leiterplatte lediglich in die Führungsnuten eingeschoben und anschließend über die elektrische Steckverbindung kontaktiert werden muss. Um eine eindeutige Endeinbaulage zu gewährleisten, kann ein haptisches Feedback über eine Rastklinke vorgesehen sein, die beim Einschieben der Leiterplatte in die Führungsnuten und dem Erreichen der Endeinbaulage verrastet und dadurch eine vordefinierte Relativposition der Leiterplatte zum Getränkeautomaten sicherstellt.

Zweckmäßig sind der erste Reedschalter und der zweite Reedschalter im Einbauzustand stehend, das heißt vertikal, angeordnet. Hierdurch ist es insbesondere möglich, den zweiten Reedschalter durch den in Vertikalrichtung beweglichen zweiten Magneten am Behälter problemlos zu schalten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Ansicht auf eine Leiterplatte mit einem ersten und zweiten Reedschalter für einen erfindungsgemäßen Getränkeautomaten,
- Fig. 2: eine Ansicht auf die Leiterplatte mit einem jeweiligen Schaltbereich/Schaltgebiet des jeweiligen Reedschalters,
- Fig. 3: eine Schnittdarstellung durch einen erfindungsgemäßen Getränkeautomaten im Bereich einer Leiterplatte und eines Behälters mit einem ersten Reedschalter und einem zugehörigen und am Behälter angeordnet ersten Magneten,
- Fig. 4: eine Schnittdarstellung durch einen erfindungsgemäßen Getränkeautomaten im Bereich eines Behälters mit einem zweiten Magneten und einem zweiten Reedschalter, wobei der zweite Magnet außerhalb des Schaltgebiets des zweiten Reedschalter ist,
- Fig. 5: eine Darstellung analog zu Fig. 4, jedoch bei sich in dem Schaltgebiet des zweiten Reedschalters befindlichem zweiten Magneten.

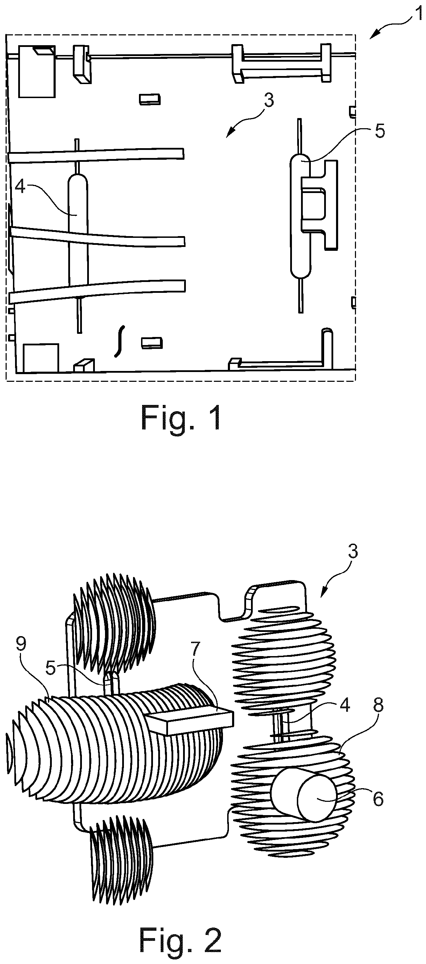

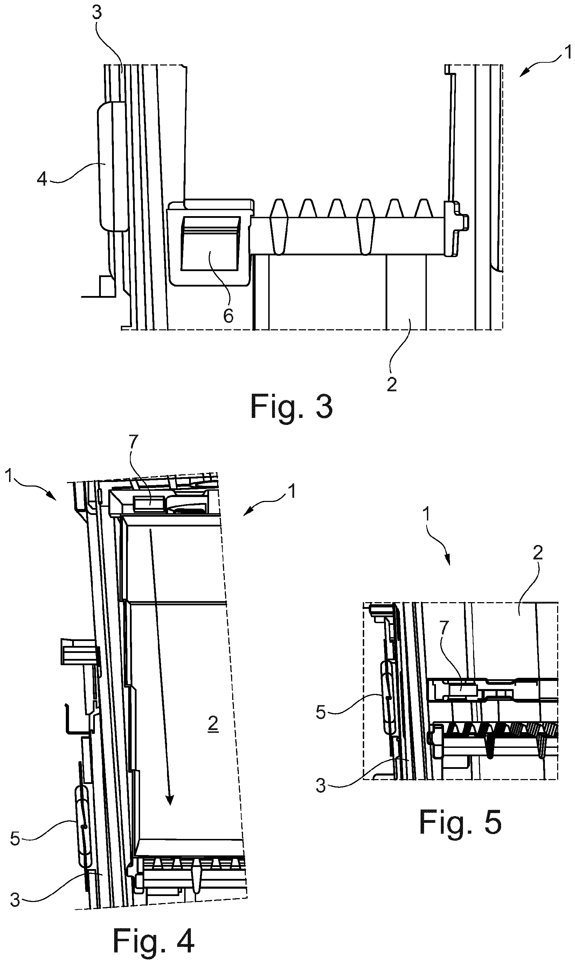

Entsprechend den Figuren 1 bis 5 weist ein erfindungsgemäßer Getränkeautomat 1, welcher beispielsweise als Kaffeevollautomat ausgebildet sein kann, einen entnehmbaren Behälter 2 (vgl. die Fig. 3 bis 5) zur Aufnahme insbesondere einer Flüssigkeit, beispielsweise eines Pflege-/Reinigungsmittels, auf. Ebenso besitzt der erfindungsgemäße Getränkeautomat 1 eine Leiterplatte 3 (vgl. die Fig.1 bis 5) mit einem ersten Reedschalter 4 und einem parallel dazu angeordneten zweiten Reedschalter 5, wobei an dem Behälter 2 ein erster Magnet 6 mit einem ersten Magnetpolpaar und ein zweiter Magnet 7 mit einem orthogonal zum ersten Magnetpolpaar ausgerichteten zweiten Magnetpolpaar angeordnet sind. Der erste Magnet 6 wirkt dabei mit dem ersten Reedschalter 4 zusammen, während der zweiten Magnet 7 mit dem zweiten Reedschalter 5 zusammenwirkt. Erfindungsgemäß sind nun die beiden Reedschalter 4, 5 auf der Leiterplatte 3 angeordnet und können dadurch auch über einen nicht näher gezeichneten gemeinsamen Steckkontakt, beispielsweise eine elektrische Steckverbindung, mit einer ebenfalls nicht gezeigten Steuereinrichtung des Getränkeautomaten 1 kontaktiert werden, was im Vergleich zu bisher erforderlichen separaten Kontaktiervorgängen eine deutliche Montagevereinfachung darstellt.

Der erste Reedschalter 4 ist dabei zur Erfassung einer Anwesenheit des Behälters 2 ausgebildet, wobei der erste Magnet 6 fest am Behälter 2 angeordnet ist. Wird also der Behälter 2 in den Getränkeautomaten 1 eingesetzt, so wird dabei der erste Magnet 6 in die Nähe des ersten Reedschalters 4 gebracht und zwar in einen Schaltbereich 8 des ersten Reedschalters 4 (vgl. Fig. 2), in welchem der erste Magnet 6 aufgrund seines Magnetfeldes das Betätigen des ersten Reedschalters 4 bewirkt.

Der zweite Magnet 7 hingegen ist beweglich, insbesondere vertikal beweglich, am Behälter 2 angeordnet und beispielsweise mit einem Schwimmer verbunden, so dass bei einem hohen Füllstand im Behälter 2 der zweite Magnet 7 weiter oben und bei einem niedrigeren Füllstand weiter unten ist (vgl. die Fig. 4 und 5). Bewegt sich somit der zweite Magnet 7 füllstandsabhängig, so durchläuft er beispielsweise ein Schaltgebiet 9 (vgl. Fig. 2) des zweiten Reedschalters 5 und betätigt diesen, sofern er sich innerhalb dessen Schaltgebiets 9 befindet. Hierdurch ist der zweite Reedschalter 5 in der Lage, einen Füllstand in dem Behälter 2 aufgrund des mit einem Pegelstand korrelierenden Standes des zweiten Magneten 7 zu erfassen.

Mit der erfindungsgemäßen Leiterplatte 3 mit den darauf angeordneten zumindest zwei Reedschaltern 4, 5 und den beiden am Behälter 2 angeordneten und zugehörigen Magneten 6, 7 ist es somit möglich, bei einem in den Getränkeautomaten 1 eingesetzten Behälter 2 sowohl dessen Anwesenheit als auch eine Füllstandshöhe in diesem zu erfassen.

Dabei kann eine mit dem ersten und zweiten Reedschalter 4, 5 kommunizierend verbundene Steuereinrichtung vorgesehen sein, die derart ausgebildet ist, dass sie einen Pflege-/Reinigungsprozess ausschließlich dann startet, wenn der Behälter 2 anwesend ist und ein Füllstand in demselben einen vordefinierten Grenzwert nicht unterschreitet und dabei sowohl der erste Reedschalter 4 als auch der zweite Reedschalter 5 geschlossen sind. Dies ist insbesondere zu einem automatisierten Durchführen von Pflege/Reinigungsprozessen in Getränkeautomaten 1 erforderlich, da ein zwar anwesender aber leerer Behälter 2 ein Reinigen beziehungsweise Pflegen nicht ermöglicht.

Alternativ ist auch denkbar, dass eine mit dem ersten und zweiten Reedschalter 4, 5 kommunizierend verbundene Steuereinrichtung vorgesehen, die so ausgebildet ist, dass sie einen Pflege-/Reinigungsprozess ausschließlich dann startet, wenn der Behälter 2 anwesend ist und ein Füllstand in demselben einen vordefinierten Grenzwert nicht unterschreitet und dabei der erste Reedschalter 4 geschlossen, der zweite Reedschalter 5 jedoch geöffnet ist. Diese Anordnung ist beispielsweise denkbar, sofern die beiden Reedschalter 4, 5 am Gehäuse auf einer Höhe angeordnet sind, die in Bezug auf den Behälter 2 in einem unteren Bereich des Behälters 2 liegt (vgl. die Fig. 3 bis 5). Beim Einsetzen des Behälters 2 wird dann durch das Magnetfeld des ersten Magneten 6 der erste Reedschalter 4 geschlossen (vgl. Fig. 3). Befindet sich der zweite Magnet 7 ebenfalls auf dieser Höhe und ist zugleich mit einem zur Erfassung des Füllstandes vorgesehenen Schwimmer gekoppelt, so wird der zweite Reedschalter 5 ebenfalls geschlossen (vgl. Fig. 5). In diesem Fall wäre jedoch nur wenig oder sogar für einen Pflegeprozess nicht ausreichend viel Flüssigkeit/Feststoff im Behälter 2. In diesem Fall wäre somit die Steuereinrichtung so ausgebildet, dass sie den Pflege-/Reinigungsprozess bei gleichzeitig geschlossenem ersten und zweiten Reedschalter 4, 5 nicht startet. Wird der Behälter 2 befüllt (vgl. Fig. 4), so bewegt sich der zweite Magnet 7 nach oben und damit aus dem Schaltbereich 9 des zweiten Reedschalters 5 heraus. Der Pflege-/Reinigungsprozess kann dann gestartet werden, wenn der erste Magnet 6 im Schaltgebiet 8 des ersten Reedschalters 4 ist und diesen schließt, während der zweite Magnet 7 außerhalb des Schaltbereichs 9 des zweiten Reedschalters 5 ist und dieser daher geöffnet ist.

Der Getränkeautomat 1 kann zudem am Gehäuse zumindest eine, vorzugsweise zwei Führungsnuten aufweisen, in welche die Leiterplatte 3 einschiebbar und darüber am Gehäuse festlegbar ist. Darüber hinaus kann man den Fig. 1 bis 5 entnehmen, dass die Reedschalter 4, 5 üblicherweise im Einbauzustand vertikal angeordnet sind, wobei selbstverständlich auch andere Anordnungen denkbar sind.

Für die Instandhaltung des Getränkeautomaten 1 werden üblicherweise zyklische Pflege-/Reinigungsprozesse, wie beispielsweise eine Entkalkung aller fluidführenden Komponenten durchgeführt, wodurch die dauerhafte Funktion aller Komponenten gewährleistet werden soll. Dies erfordert eine entsprechende Bevorratung an Pflege-/Reinigungsmittel am Getränkeautomaten 1, insbesondere sofern die Pflege-/Reinigungsprozesse automatisiert und außerhalb einer üblichen Nutzungszeit ausgeführt werden sollen.

Damit die Pflege-/Reinigungsprozesse die gewünschte und erforderliche Wirksamkeit erzielen, muss zum Zeitpunkt eines anstehenden Pflege-/Reinigungsprozesses sowohl der als Pflegemittelbehälter ausgebildete Behälter 2 anwesend als auch eine erforderliche Menge an Pflegemittel darin eingefüllt sein. Mit dem ersten und zweiten Magneten 6, 7 und den zugehörigen auf der Leiterplatte 3 angeordneten ersten und zweiten Reedschaltern 4, 5 ist dies technisch vergleichsweise einfach erfassbar. Über den ersten Reedschalter 4 und den ersten Magneten 6 wird dabei die Anwesenheit des Behälters 2 erfasst, während über den zweiten Reedschalter 5 und den beweglich am Behälter 2 angeordneten zweiten Magneten 7 der erforderliche Füllstand im Behälter 2 detektiert wird. Aufgrund des orthogonal zum ersten Magneten 6 angeordneten zweiten Magneten 7 und die gleichzeitig parallele Anordnung der beiden Reedschalter 4, 5 kann ein sich örtlich von einem Schaltgebiet 9 abgrenzender Schaltbereich 8 (vgl. Fig. 2) genutzt werden, um eine eindeutige Zuordnung zu gewährleisten. Durch die gemeinsame Anordnung der beiden Reedschalter 4, 5 auf der Leiterplatte 3 können diese über eine einzige, gemeinsame elektrische Steckverbindung mit der Steuereinrichtung gekoppelt werden.

Mit dem erfindungsgemäßen Getränkeautomaten 1 ist somit sowohl eine kontaktlose Erkennung der Anwesenheit des Behälters 2 und einer Füllstandshöhe in demselben bei gleichzeitig äußerst kompakter Bauweise möglich, da die beiden Reedschalter 4, 5 einen nur geringen Bauraum erfordern. Durch die Anordnung der beiden Reedschalter 4, 5 auf der gemeinsamen Leiterplatte 3 ist auch nur ein Montageschritt durch Anbringen der Leiterplatte 3 am Getränkeautomaten 1 erforderlich, was äußerst montagefreundlich ist. Durch die gemeinsame elektrische Steckverbindung ist auch ein separates und damit deutlich aufwendigeres Kontaktieren beider Reedschalter 4, 5 nicht erforderlich.

### Bezugszeichenliste

- 1: Getränkeautomat
- 2: Behälter
- 3: Leiterplatte
- 4: erster Reedschalter
- 5: zweiter Reedschalter
- 6: erster Magnet
- 7: zweiter Magnet
- 8: Schaltbereich
- 9: Schaltgebiet

## Patentansprüche

1. Getränkeautomat (1) mit einem entnehmbaren Behälter (2) zur Aufnahme insbesondere einer Flüssigkeit und mit einer am Getränkeautomaten (1) angeordneten Leiterplatte (3), auf der ein erster Reedschalter (4) und ein parallel dazu angeordneter zweiter Reedschalter (5) angeordnet sind, **dadurch gekennzeichnet, dass** an dem Behälter (2) ein erster Magnet (6) mit einem ersten Magnetpolpaar und ein zweiter Magnet (7) mit einem orthogonal dazu ausgerichteten zweiten Magnetpolpaar angeordnet sind, und wobei der erste Magnet (6) mit dem ersten Reedschalter (4) und der zweite Magnet (7) mit dem zweiten Reedschalter (5) zusammenwirkt.

2. Getränkeautomat nach Anspruch 1, **dadurch gekennzeichnet, dass** der Behälter (2) ein Pflegemittelbehälter ist.

3. Getränkeautomat nach Anspruch 1 oder 2, **dadurch gekennzeichnet, dass** der erste Magnet (6) fest am Behälter (2) angeordnet und der erste Reedschalter (4) zur Erfassung einer Anwesenheit des Behälters (2) ausgebildet ist.

4. Getränkeautomat nach einem der vorhergehenden Ansprüche, **dadurch gekennzeichnet, dass** der zweite Magnet (7) beweglich am Behälter (2) angeordnet und der zweite Reedschalter (5) zur Erfassung eines Füllstandes in dem Behälter (2) ausgebildet ist.

5. Getränkeautomat nach einem der vorhergehenden Ansprüche, **dadurch gekennzeichnet, dass** eine mit dem ersten Reedschalter (4) und dem zweiten Reedschalter (5) kommunizierend verbundene Steuereinrichtung vorgesehen ist, die so ausgebildet ist, dass sie einen Pflegeprozess ausschließlich dann startet, wenn der Behälter (2) anwesend ist und ein Füllstand in demselben einen vordefinierten Grenzwert nicht unterschreitet.

6. Getränkeautomat nach einem der vorhergehenden Ansprüche, **dadurch gekennzeichnet, dass** der Getränkeautomat (1) als Kaffeevollautomat ausgebildet ist.

7. Getränkeautomat nach Anspruch 5 oder 6, **dadurch gekennzeichnet, dass** die Leiterplatte (3) eine elektrische Steckverbindung aufweist, über welche sie mit der Steuereinrichtung kommunizierend verbindbar ist.

8. Getränkeautomat nach einem der vorhergehenden Ansprüche, **dadurch gekennzeichnet, dass** der Getränkeautomat (1) ein Gehäuse mit einer Führungsnut aufweist, in welche die Leiterplatte (3) einschiebbar und darüber am Gehäuse festlegbar ist.

9. Getränkeautomat nach einem der vorhergehenden Ansprüche, **dadurch gekennzeichnet, dass** der erste Reedschalter (4) und der zweite Reedschalter (5) im Einbauzustand vertikal angeordnet sind.

10. Getränkeautomat nach einem der vorhergehenden Ansprüche, **dadurch gekennzeichnet, dass** der erste Reedschalter (4) einen Schaltbereich (8) aufweist, in welchem der erste Magnet (6) aufgrund seines Magnetfeldes ein Betätigen des ersten Reedschalters (4) bewirkt, und/oder dass der zweite Reedschalter (5) ein Schaltgebiet (9) aufweist, in welchem der zweite Magnet (7) aufgrund seines Magnetfeldes ein Betätigen des zweiten Reedschalters (5) bewirkt.

## Claims

1. Beverage vending machine (1) with a removable container (2) for receiving in particular a liquid and with a conductor board (3) arranged on the beverage vending machine (1), on which a first reed switch (4) and a second reed switch (5) arranged parallel thereto are arranged, **characterised in that** a first magnet (6) with a first magnetic pole pair and a second magnet (7) with a second magnet pole pair aligned orthogonally thereto are arranged on the container (2), and wherein the first magnet (6) interacts with the first reed switch (4) and the second magnet (7) interacts with the second reed switch (5).

2. Beverage vending machine according to claim 1, **characterised in that** the container (2) is a cleaning agent container.

3. Beverage vending machine according to claim 1 or 2, **characterised in that** the first magnet (6) is arranged fixedly on the container (2) and the first reed switch (4) is embodied to detect a presence of the container (2).

4. Beverage vending machine according to one of the preceding claims, **characterised in that** the second magnet (7) is arranged movably on the container (2) and the second reed switch (5) is embodied to detect a fill level in the container (2).

5. Beverage vending machine according to one of the preceding claims, **characterised in that** a control facility connected so as to communicate with the first reed switch (4) and the second reed switch (5) is provided, which is embodied such that it only then starts a treatment process when the container (2) is present and a fill level in the same does not reach a predefined limit value.

6. Beverage vending machine according to one of the preceding claims, **characterised in that** the beverage vending machine (1) is embodied as a fully automatic coffee maker.

7. Beverage vending machine according to claim 5 or 6, **characterised in that** the conductor board (3) has an electrical plug connection, by way of which it can be connected so as to communicate with the control facility.

8. Beverage vending machine according to one of the preceding claims, **characterised in that** the beverage vending machine (1) has a housing with a guide groove, into which the conductor board (3) can be introduced and by way of which it can be fixed to the housing.

9. Beverage vending machine according to one of the preceding claims, **characterised in that** the first reed switch (4) and the second reed switch (5) are arranged vertically in the installed state.

10. Beverage vending machine according to one of the preceding claims, **characterised in that** the first reed switch (4) has a switching range (8), in which, on account of its magnetic field, the first magnet (6) brings about an actuation of the first reed switch (4), and/or that the second reed switch (5) has a switching area (9), in which, on account of its magnetic field, the second magnet (7) brings about an actuation of the second reed switch (5).

## Revendications

1. Distributeur automatique de boissons (1) comprenant un réservoir amovible (2) pour recevoir en particulier un liquide et une carte à circuit imprimé (3) disposée sur le distributeur automatique de boissons (1), sur laquelle un premier commutateur Reed (4) et un deuxième commutateur Reed (5) agencé parallèlement à celui-ci sont disposés,
**caractérisé en ce que**, sur le réservoir (2), sont disposés un premier aimant (6) doté d'une première paire de pôles magnétiques et un deuxième aimant (7) doté d'une deuxième paire de pôles magnétiques orientés orthogonalement à celui-ci, et
dans lequel le premier aimant (6) coopère avec le premier commutateur Reed (4) et le deuxième aimant (7) coopère avec le deuxième commutateur Reed (5).

2. Distributeur automatique de boissons selon la revendication 1, **caractérisé en ce que** le réservoir (2) est un réservoir de produit d'entretien.

3. Distributeur automatique de boissons selon la revendication 1 ou 2, **caractérisé en ce que** le premier aimant (6) est monté de façon solidaire sur le réservoir (2) et le premier commutateur Reed (4) est configuré pour détecter la présence du réservoir (2).

4. Distributeur automatique de boissons selon l'une des revendications précédentes, **caractérisé en ce que** le deuxième aimant (7) est disposé de façon mobile sur le réservoir (2) et le deuxième commutateur Reed (5) est configuré pour détecter un niveau de remplissage dans le réservoir (2).

5. Distributeur automatique de boissons selon l'une des revendications précédentes, **caractérisé en ce qu'**un dispositif de commande relié en communication avec le premier commutateur Reed (4) et le deuxième commutateur Reed (5) est fourni, lequel est configuré de sorte qu'il démarre un processus d'entretien uniquement lorsque le réservoir est présent (2) et lorsqu'un niveau de remplissage dans celui-ci n'est pas inférieur à une valeur limite prédéfinie.

6. Distributeur automatique de boissons selon l'une des revendications précédentes, **caractérisé en ce que** le distributeur automatique de boissons (1) est conçu sous forme d'une machine à café entièrement automatique.

7. Distributeur automatique de boissons selon la revendication 5 ou 6, **caractérisé en ce que** la carte à circuit imprimé (3) comprend un connecteur électrique enfichable, par le biais duquel elle peut être reliée en communication avec le dispositif de commande.

8. Distributeur automatique de boissons selon l'une des revendications précédentes, **caractérisé en ce que** le distributeur automatique de boissons (1) comprend un boîtier comprenant une rainure de guidage, dans laquelle la carte à circuit imprimé (3) peut être insérée et par laquelle elle peut être fixée au boîtier.

9. Distributeur automatique de boissons selon l'une des revendications précédentes, **caractérisé en ce que** le premier commutateur Reed (4) et le deuxième commutateur Reed (5) sont disposés verticalement à l'état monté.

10. Distributeur automatique de boissons selon l'une des revendications précédentes, **caractérisé en ce que** le premier commutateur Reed (4) comprend une plage de commutation (8), dans laquelle le premier aimant (6) induit un actionnement du premier commutateur Reed (4) par son champ magnétique, et/ou **en ce que** le deuxième commutateur Reed (5) comprend un domaine de commutation (9), dans lequel le deuxième aimant (7) induit un actionnement du deuxième commutateur Reed (5) par son champ magnétique.
